# EUROPEAN PATENT APPLICATION

(11) **EP 1 672 461 A2**
(43) Date of publication of application: **21.06.2006**
(21) Application number: 05256008.3
(22) Date of filing: 27.09.2005
(51) Int. Cl.: G06F 1/00

(54) **Method of authenticating an executable application**

(30) Priority: 17.12.2004 GB 0427696
(71) Applicant: NCR International, Inc., Dayton, Ohio 45479 (US)
(72) Inventor: Han, Richard Andrew, Lundie, Angus DD2 5NW (GB); Monaghan, Andrew, Dundee DD2 1DS (GB)
(74) Representative: Williamson, Brian

(57) **Abstract**

A method of method and apparatus for authenticating an executable application program is described in which the application is installed in a system. Prior to providing access, for the executable application, to secure hardware or software a subordinate program verifies the authenticity of the executable application.

## Description

The present invention relates to authenticating application programs, and is particularly directed to a method of authenticating an application program for use in an unattended system such as at a self-service terminal (SST) or an automated teller machine (ATM).

A typical authentication scheme to authenticate a user in an unattended system having a number of installed application programs relies upon the user having some secret knowledge (such as a personal identification number) to allow the user to gain access to valuable system resources of the unattended system.

While this authentication scheme may provide adequate security in an attended system, such an authentication scheme may not provide the level of security desired in an unattended system, such as at a SST or ATM. This problem is aggravated in relation to ATMs because CEN XFS provides a standardized interface to drive self-service devices. This poses a security issue in that the interface to drive devices is public knowledge, and an attacker could (for example) dispense all of the cash in the ATM by creating and introducing a rogue application into the ATM system. While the ATM is generally well protected against such attacks being introduced (e.g., secure networks and a locked down operating system), as mentioned above, a further level of protection is desirable to protect against cases where the existing security is breached (e.g., through system weaknesses or use of insider knowledge).

According to a first aspect of the present invention there is provided a method of authenticating an executable application program installed in a system, wherein prior to providing access, for the executable application, to secure hardware or software a subordinate program verifies the authenticity of the executable application.

Preferably, the executable application attempts to access secure hardware or software through a standardised interface. Most preferably, the standardised interface is CEN XFS.

Preferably, the secure hardware or software is part of an un attended system. Most preferably, the unattended system is an Automate Teller Machine system.

According to a second aspect of the present invention there is provided a system having an executable application program installed therein, wherein the system is arranged such that prior to providing access, for the executable application, to secure hardware or software a subordinate program verifies the authenticity of the executable application.

Preferably, the system further comprises a standardised interface, such as CEN XFS.

Preferably, the system is an un attended system. Most preferably, the unattended system is an Automate Teller Machine system.

Preferably, the executable application is authenticated by verifying that the application has an authentic unique signature

The solution in accordance with the present invention has a number of advantages. Generally, digital signature authentication is performed by a separate auditing process before the application process is spawned - if the check fails then the application will not be executed. (E.g., Internet explorer uses this model to protect against malicious code download and execution). With this solution, in the event that an intruder has breached this security layer and has managed to execute the application, access to the secure device is still prevented because the SP DLL verifies that the rogue process has been spawned from an executable image that is not signed.

An embodiment of the present invention will now be described, by way of example, with reference to the accompanying drawings, in which:
FIG. 1 is a schematic view illustrating an automated teller machine (ATM) embodying the present invention;
FIG. 2 is a block diagram representation of the ATM of FIG. 1; and
FIG. 3 illustrated the CEN XFS architecture utilised with an ATM.

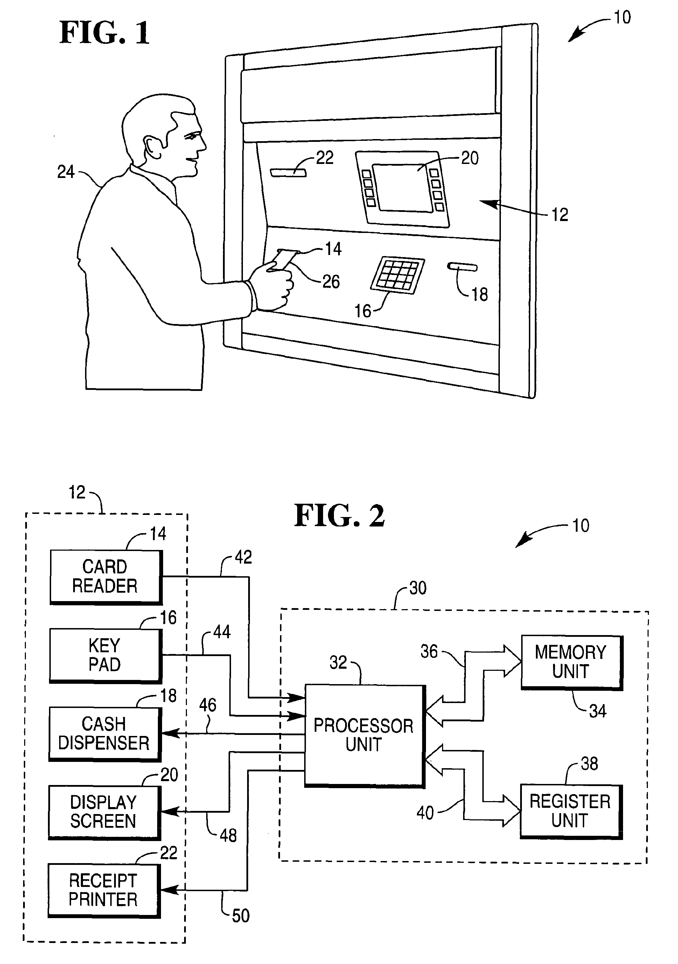

The present invention is directed to a method of authenticating an application program to enable the application program to gain access to valuable system resources in response to a user request which requires execution of the application program. While the method of authenticating an application program in accordance with the present invention may be applied in different environments, the method is particularly useful for authenticating an application program which is installed in an unattended system, such as at a self-service terminal (SST) or an automated teller machine (ATM). By way of example, an ATM 10 embodying the present invention is illustrated in FIG. 1.

The ATM 10 comprises a user interface in the form of a front panel 12. The front panel 12 includes a card reader 14, a key pad 16, a cash dispenser 18, a CRT display screen 20, and a receipt printer 22. The card reader 14 has a card slot through which a customer 24 can insert a user identifying card 26 at the commencement of a transaction to be conducted by the customer 24. The cash dispenser 18 has a cash slot through which cash currency notes stored inside the ATM 10 can be delivered to the customer 24 during the transaction. The receipt printer 22 has a receipt slot through which a receipt of the transaction is delivered to the customer 24 at termination of the transaction.

When the customer 24 inserts the user identifying card 26 into the card slot of the card reader 14, the card reader reads data contained on the card. The customer 24 is then prompted on the CRT display screen 20 to enter a personal identification number (PIN) via the key pad 16. After the correct PIN is entered, menus are displayed on the display screen 20 to enable the customer 24 to carry out the desired transaction. After the transaction is completed, the receipt printer 22 prints a receipt of the transaction and delivers the receipt through the slot of the receipt printer 22 to the customer 24.

Referring to FIGS. 1 and 2, the ATM 10 further comprises a controller unit 30 which communicates with components of the front panel 12. The controller unit 30 includes a processor unit 32, a memory unit 34 connected via bus line 36 to the processor 32, and a register unit 38 which is connected via bus line 40 to the processor 32. The register unit 38 is a permanent storage media such as a hard disk or non-volatile RAM, for example. Although the memory unit 34 and the register unit 38 are shown as separate units in FIG. 2, it is contemplated that these units may be represented as a single storage unit. The processor 32 receives input signals on lines 42, 44 from the card reader 14 and the key pad 16, respectively, and provides output signals on lines 46, 48, 50 to the cash dispenser 18, the display screen 20, and the receipt printer 22, respectively, to control the amount of cash dispensed by the cash dispensed by the cash dispenser 18, the information displayed on the display screen 20, and the information printed by the receipt printer 22.

A number of application programs are stored in the memory unit 34. The specific application programs stored in the memory unit 34 depend upon the features and capabilities of the particular ATM 10. At least some of the application programs, when executed, control operation of valuable system resources like the cash dispenser 18, for example. It should be apparent that the application programs installed in an unattended system, such as at the ATM 10, need to be safeguarded, especially the application programs which control operation of valuable system resources. The application programs installed at the ATM 10 are safeguarded in a manner in accordance with the present invention, as explained herein below.

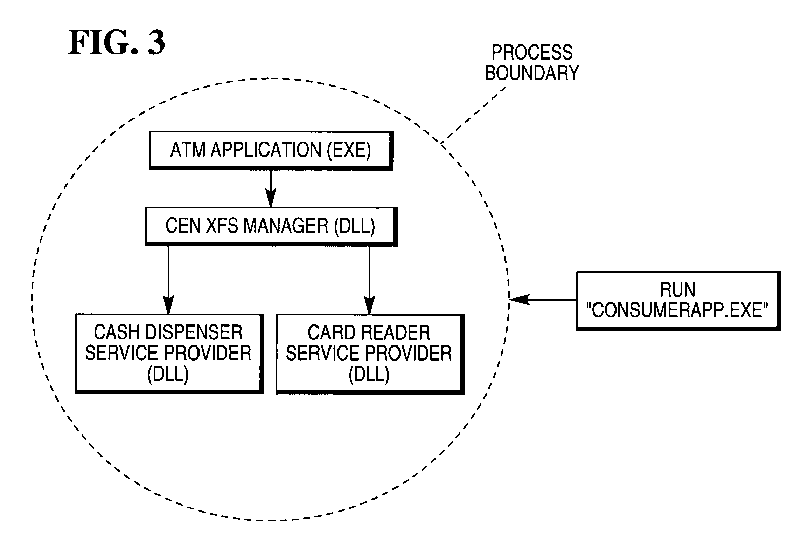

The ATM is operated using CEN XFS, which is a "plug-in" Dynamic Link Library architecture, where the support for a given device (e.g., cash dispenser) is delivered by the hardware vendor as a Service Provider DLL. The ATM application drives the device by loading the Service Provider DLL indirectly through the CEN XFS manager (another DLL), as is depicted below in FIG. 3.

The ATM application process loads the service provider DLL in the context of its own process through the CEN XFS manager. In Windows systems it is possible to determine the executable module (.EXE file) that spawned any given process. Since each Service Provider (SP) DLL is loaded in the application process context, it is possible for the SP DLL to determine:
1) The parent process context and then subsequently
2) The executable module that launched the process.

E.g., In this case the Cash Dispenser SP DLL identifies that the executable file "ConsumerApp.EXE" was used to launch the application.

In addition, Windows systems offer a facility to digitally sign executable modules. It also provides APIs to verify such digital signatures to ensure that:
1) The file has not been altered since it was signed
2) The file is signed by a trusted authority recognised by this system.

This functionality enables the SP DLL to make a decision based upon whether the ATM application is signed by a trusted authority. E.g., upon detecting that the application is not digitally signed (and hence not trusted) the SP DLL might decide to:
1) Offer no functionality
2) Offer limited functionality (e.g., read device status but not permit certain operations such as cash dispense).
3) Offer full functionality

In essence this allows a service provider dynamic linking library SP DLL to ensure that only the trusted ATM application can access secure hardware.

When in use, should a rogue executable application, such as an ATM application, be installed by whatever means the method in accordance with the present invention will ensure that the system does not allow access to secure hardware or software despite the boundary protection being defeated.

The subordinate software, in this case, the service provider DLL authenticates the executable application by authenticating that the application has an authentic unique signature.

Any standard signature verification means can be utilised for this purpose, as a unique aspect of the invention is not the means by which the executable application is authenticated, but rather the fact that the subordinate program does so at all.

Various modifications may be made to the above-described embodiments within the scope of the present invention.

## Claims

1. A method of authenticating an executable application program Installed in a system, wherein prior to providing access, for the executable application, to secure hardware or software a subordinate program verifies the authenticity of the executable application.

2. A method as claimed in claim 1, wherein the executable application attempts to access secure hardware or software through a standardised interface.

3. A method as claimed in claim 2, wherein the standardised interface is CEN XFS.

4. A method as claimed in any of claims 1 to 3, wherein the secure hardware or software is part of an un attended system.

5. A method as claimed in claim 4, wherein the unattended system is an Automate Teller Machine system.

6. A method as claimed in any previous claim, in which the executable application is authenticated by verifying that the application has an authentic unique signature.

7. A system having an executable application program installed therein, wherein the system is arranged such that prior to providing access, for the executable application, to secure hardware or software a subordinate program verifies the authenticity of the executable application.

8. A system as claimed in claim 7, further comprising a standardised interface.

9. A system as claimed in claim 8, wherein the standardised interface is CEN XFS.

10. A system as claimed in any of claims 7 to 9, wherein the system is an un attended system.

11. A system as claimed in claim 10, wherein the unattended system is an Automate Teller Machine system.

12. A system as claimed in any of claims 7 to 11, wherein the executable application is authenticated by verifying that the application has an authentic unique signature
